(19) Europäisches Patentamt
European Patent Office
Office européen des brevets

(11) **EP 3 506 578 B1**

(12) **FASCICULE DE BREVET EUROPEEN**

(45) Date de publication et mention
de la délivrance du brevet:
**21.10.2020 Bulletin 2020/43**

(51) Int Cl.:
**H04L 25/02** *(2006.01)* **H04B 7/08** *(2006.01)*

(21) Numéro de dépôt: **18214722.3**

(22) Date de dépôt: **20.12.2018**

(54) **PROCEDE DE DETECTION D'EMETTEURS RADIOELECTRIQUES ET DISPOSITIF ASSOCIE**

VERFAHREN ZUR DETEKTION VON FUNKSIGNALSENDERN, UND ENTSPRECHENDE VORRICHTUNG

RADIO-FREQUENCY TRANSMITTER DETECTION METHOD AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2017 FR 1701385**

(43) Date de publication de la demande:
**03.07.2019 Bulletin 2019/27**

(73) Titulaire: **Avantix**
**13794 Aix-en-Provence Cedex 3 (FR)**

(72) Inventeur: **CHEFSON, Loïc**
**13100 Aix en Provence (FR)**

(74) Mandataire: **Cabinet Camus Lebkiri**
**25 rue de Maubeuge**
**75009 Paris (FR)**

(56) Documents cités:
**WO-A1-2015/024827**

- BADAWY AHMED ET AL: "Estimating the number of sources in white Gaussian noise: simple eigenvalues based approaches", IET SIGNAL PROCESSING, THE INSTITUTION OF ENGINEERING AND TECHNOLOGY, MICHAEL FARADAY HOUSE, SIX HILLS WAY, STEVENAGE, HERTS. SG1 2AY, UK, vol. 11, no. 6, 1 août 2017 (2017-08-01), pages 663-673, XP006062686, ISSN: 1751-9675, DOI: 10.1049/IET-SPR.2016.0128
- UGUR SARAC ET AL: "Detection and localization of emitters in the presence of multipath using a uniform linear antenna array", SENSOR ARRAY AND MULTICHANNEL SIGNAL PROCESSING WORKSHOP, 2008. SAM 2008. 5TH IEEE, IEEE, PISCATAWAY, NJ, USA, 21 juillet 2008 (2008-07-21), pages 419-422, XP031312365, ISBN: 978-1-4244-2240-1

**Description**

**DOMAINE TECHNIQUE DE L'INVENTION**

Le domaine technique de l'invention est celui de la détection d'émetteurs radioélectriques.

La présente invention concerne en particulier un procédé de détection d'émetteurs radioélectriques mis en œuvre par un dispositif comportant un réseau antennaire à acquisition simultanée. La présente invention concerne également un dispositif, un produit-programme d'ordinateur et un support d'enregistrement pour la mise en œuvre d'un tel procédé.

**ARRIERE-PLAN TECHNOLOGIQUE DE L'INVENTION**

Les algorithmes de détection classiques détectent des émetteurs radioélectriques en étudiant la puissance du signal reçu par un dispositif d'acquisition comportant une ou plusieurs antennes. En effet, en l'absence d'émetteurs, la valeur de la puissance du signal reçu est plus faible qu'en présence d'un émetteur et donc, en choisissant un seuil adapté, on peut détecter la présence d'un émetteur par seuillage de la puissance du signal reçu.

Les algorithmes combinent cette étude de la puissance du signal reçu avec une analyse fréquentielle en calculant le spectre du signal reçu. En présence d'un émetteur, un pic de fréquence apparaît sur le spectre et on peut donc détecter la présence d'un émetteur.

Cependant, si deux émetteurs ont émis des ondes radioélectriques à des instants très proches et à des fréquences très proches, un unique pic de puissance et un unique pic de fréquence seront visibles et il sera impossible de discriminer les deux émetteurs.

Il existe donc un besoin de détecter dans un signal reçu tous les émetteurs ayant émis des ondes radioélectriques sur la durée d'acquisition du dispositif d'acquisition et donc de discriminer une pluralité d'émetteurs ayant émis des ondes radioélectriques à des instants très proches et à des fréquences très proches.

Le document WO 2015/024827 intitulé « Procédé de détection d'un signal électromagnétique par un réseau antennaire et dispositif mettant en œuvre le procédé » et le document intitulé « Estimating the number of sources in white Gaussian noise : simple eigenvalues based approaches » de Badawy Ahmed et al, DOI : 10.1049 sont connus de l'état de la technique.

**RESUME DE L'INVENTION**

L'invention offre une solution aux problèmes évoqués précédemment, en permettant de discriminer une pluralité d'émetteurs qui émettent à des instants très proches et à des fréquences très proches, c'est-à-dire qui ne sont pas discriminables temporellement et fréquentiellement.

Un premier aspect de l'invention concerne un procédé de détection de la présence d'un ou de plusieurs émetteurs radioélectriques dans un environnement, le procédé étant mis en œuvre par un dispositif comportant une unité de calcul et un réseau antennaire comportant une pluralité d'antennes aptes à réaliser des acquisitions en simultané de l'environnement sous forme de signaux d'acquisition pendant une durée d'acquisition et à recevoir et transmettre en simultané les signaux d'acquisition sous forme numérique à l'unité de calcul, l'unité de calcul étant apte à réaliser des traitements sur des signaux numérisés, le procédé comportant les différentes étapes suivantes :

- Pour chaque antenne,

  • Recevoir et numériser le signal d'acquisition sous forme de signal numérisé et transmettre le signal numérisé à l'unité de calcul ;

  • Générer une pluralité de spectres à partir du signal numérisé ayant une résolution fréquentielle choisie, un spectre comportant une pluralité de points, chaque point étant affecté à un numéro appelé bin ;

le procédé étant caractérisé en ce qu'il comporte les étapes suivantes :

- Pour chaque bin, regrouper les spectres des différentes antennes correspondant au bin et calculer une matrice de covariance ;

- Regrouper les matrices de covariance dont les spectres associés correspondent à un même bloc de durée, un bloc de durée étant défini comme une sous-durée de la durée d'acquisition, pour former des matrices de covariance bloc ;

- Calculer une première mesure de colinéarité des matrices de covariance bloc entre deux blocs de durée consécutifs et une seconde mesure de colinéarité des matrices de covariance bloc entre deux bins consécutifs d'un même bloc de durée ;

- Détecter un ou plusieurs émetteurs radioélectriques en réalisant les étapes suivantes :

  • Pour chaque bin, calculer le produit entre la première et la seconde mesure de colinéarité pour former un produit de colinéarité ;
  • Pour chaque bloc de durée :

    ◦ Relever le numéro des bins de début pour lesquels le produit de colinéarité passe au-dessus d'un seuil, c'est-à-dire que la valeur du produit de colinéarité pour un bin de début est au-dessus du seuil et la valeur du produit de colinéarité pour le bin précédent ce bin de début est en dessous du seuil ;
    ◦ Le nombre de bins de début donne le nombre d'émetteurs radioélectriques détectés dans le bloc de durée.

Grâce à l'invention, l'information de position de chaque émetteur est intégrée au sein du procédé de détection. En effet, la génération d'une pluralité de spectres à partir du signal numérisé d'une antenne permet de construire un diagramme temps-fréquence ou spectrogramme qui donne l'amplitude et la phase du signal numérisé de l'antenne pour chaque case temps-fréquence. Un spectrogramme est construit pour chaque antenne et chaque émetteur produit différents résultats d'amplitude et de phase sur les différents spectrogrammes en fonction de sa position et de son orientation par rapport au réseau antennaire. Les différences relatives en amplitude et en phase entre les différents spectrogrammes sont modélisées par les matrices de covariance. Ainsi, en construisant un spectrogramme de matrices de covariance qui donne la matrice de covariance pour chaque case temps-fréquence, comme la taille des cases temps-fréquence a été réglée pour qu'un émetteur occupe plusieurs cases temps-fréquence sur le spectrogramme de matrices de covariance, et que les matrices de covariance des cases temps-fréquence de l'émetteur sont stables entre elles, il est possible de détecter l'émetteur en quantifiant la stabilité de la matrice de covariance entre cases temps-fréquence voisines, notamment en s'intéressant aux valeurs élevées de colinéarité selon la première et la seconde mesure de colinéarité, c'est-à-dire selon l'axe temporel et l'axe fréquentiel du spectrogramme de matrices de covariance bloc. Par ce procédé, il est alors possible de discriminer deux émetteurs qui émettent à des instants très proches et à des fréquences très proches, c'est-à-dire deux émetteurs qui sont recouverts partiellement en temps et en fréquence, si les directions d'arrivée des ondes radioélectriques qu'ils émettent sont suffisamment éloignées, c'est-à-dire si les deux émetteurs sont discriminables spatialement.

Outre les caractéristiques qui viennent d'être évoquées dans le paragraphe précédent, le procédé de détection selon un premier aspect de l'invention peut présenter une ou plusieurs caractéristiques complémentaires parmi les suivantes, considérées individuellement ou selon toutes les combinaisons techniquement possibles.

Avantageusement, l'étape de génération de spectres du procédé de détection selon un premier aspect de l'invention comporte les sous-étapes suivantes :

- Découper le signal numérisé en une pluralité de fenêtres, de manière à former des sous-signaux numérisés ;
- Pour chaque sous-signal numérisé, calculer une transformée de Fourier discrète pour obtenir un spectre.

Ainsi, on génère une pluralité de spectres du signal numérisé d'une antenne qui vont permettre de construire un diagramme temps-fréquence ou spectrogramme de l'antenne indiquant pour chaque case temps-fréquence l'amplitude et la phase du sous-signal numérisé correspondant.

Avantageusement, l'étape de génération de spectres du procédé de détection selon un premier aspect de l'invention comporte une sous-étape de pré-traitement pour formater le signal numérisé avant la sous-étape de découpage.

Ainsi, cela permet de conditionner les signaux numérisés de manière qu'ils soient bien formatés avant la réalisation des étapes de calculs.

Avantageusement, dans la sous-étape de découpage du signal numérisé du procédé de détection selon un premier aspect de l'invention, chaque fenêtre recouvre une partie de la fenêtre précédente.

Ainsi, les informations données par le spectrogramme se recoupent entre différentes cases temps-fréquence voisines ce qui permet d'obtenir une meilleure résolution temporelle sans modifier la résolution fréquentielle et d'atténuer les effets d'une éventuelle sous-étape pondération des sous-signaux numérisés.

Avantageusement, l'étape de génération de spectres du procédé de détection selon un premier aspect de l'invention comporte une sous-étape de pondération des sous-signaux numérisés avant le calcul des transformées de Fourier discrètes de chaque sous-signal numérisé.

Ainsi, cela permet de conditionner les sous-signaux numérisés de manière à ce qu'ils soient bien formatés avant application des transformées de Fourier discrètes, par exemple pour contrer un phénomène de fuite spectrale.

Avantageusement, les matrices de covariance bloc du procédé de détection selon un premier aspect de l'invention sont formées par moyennage des valeurs des matrices de covariance correspondant à un même bloc de durée.

Ainsi, on améliore le rapport signal à bruit en construisant le diagramme temps-fréquence de matrices de covariance bloc plutôt que le diagramme temps-fréquence de matrices de covariance.

Avantageusement, la première mesure de colinéarité du procédé de détection selon un premier aspect de l'invention est une mesure de produit scalaire normalisé entre la matrice de covariance bloc d'un premier bloc de durée et la matrice de covariance bloc d'un deuxième bloc de durée, deuxième bloc de durée étant le bloc de durée suivant le premier bloc de durée.

Avantageusement, la seconde mesure de colinéarité du procédé de détection selon un premier aspect de l'invention est une mesure de produit scalaire normalisé entre la matrice de covariance bloc d'un premier bin et la matrice de covariance bloc d'un deuxième bin, deuxième bin étant le bin suivant le premier bin dans un même bloc de durée.

Ainsi, comme un émetteur occupe plusieurs cases temps-fréquence sur le spectrogramme de matrices de covariance bloc, on cherche à quantifier la stabilité de la matrice de covariance bloc entre cases voisines ce qui équivaut à étudier la colinéarité. La première mesure de colinéarité quantifie la colinéarité suivant l'axe temporel du spectrogramme de matrices de covariance bloc et la seconde mesure de colinéarité quantifie la colinéarité suivant l'axe fréquentiel du spectrogramme de matrices de covariance bloc. Les définitions de la première et la seconde mesure de colinéarité permettent d'obtenir des mesures simples avec des valeurs comprises entre 0 et 1, le 1 signifiant que les matrices de covariance bloc sont parfaitement colinéaires et donc qu'elles sont liées à un même émetteur.

Avantageusement, la valeur du seuil choisi pour l'étape de détection du procédé de détection selon un premier aspect de l'invention dépend de la résolution fréquentielle choisie et de la sous-durée d'acquisition correspondant à un bloc de durée.

Ainsi, le seuil dépend des dimensions des cases temps-fréquences du spectrogramme de matrices de covariance bloc. Plus les cases sont grandes, plus il est difficile de discriminer les émetteurs du bruit ambiant et donc plus le seuil est élevé pour se prémunir des fausses alarmes, c'est-à-dire des détections déclenchées par du bruit.

Un deuxième aspect de l'invention concerne un dispositif permettant la mise en œuvre du procédé de détection selon un premier aspect de l'invention caractérisé en ce qu'il comporte :

- Un réseau antennaire comportant une pluralité d'antennes aptes à recevoir simultanément et à numériser des signaux d'acquisition pour les transmettre à une unité de calcul sous forme de signaux numérisés ;
- Une unité de calcul apte à réaliser des fonctions de calcul et de détection sur des signaux numérisés.

Un troisième aspect de l'invention concerne un produit programme d'ordinateur comprenant des instructions qui, lorsque le programme est exécuté par un ordinateur, conduisent celui-ci à mettre en œuvre le procédé selon un premier aspect de l'invention.

Un quatrième aspect de l'invention concerne un support d'enregistrement lisible par ordinateur comprenant des instructions qui, lorsqu'elles sont exécutées par un ordinateur, conduisent celui-ci à mettre en œuvre le procédé selon un premier aspect de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une représentation schématique du procédé selon un premier aspect de l'invention.
- La figure 2 montre une représentation schématique du dispositif selon un deuxième aspect de l'invention.
- La figure 3 illustre la sous-étape de découpage d'un signal numérisé en sous-signaux numérisés.
- La figure 4 montre un spectre illustrant la notion de bin.
- La figure 5 montre le découpage en cases temps-fréquence du diagramme temps-fréquence de matrice de covariance bloc.
- La figure 6 illustre le seuillage du produit de colinéarité.

## DESCRIPTION DETAILLEE D'AU MOINS UN MODE DE REALISATION DE L'INVENTION

Sauf précision contraire, un même élément apparaissant sur des figures différentes présente une référence unique.

Un premier aspect de l'invention concerne un procédé de détection 100 de la présence d'un ou de plusieurs émetteurs radioélectriques 300 dans un environnement proche d'un dispositif 200 selon un deuxième aspect de l'invention, permettant la mise en œuvre du procédé de détection 100. Par environnement, on entend une zone de couverture angulaire correspondant à un cône de révolution ayant pour axe une direction donnée pouvant être n'importe quelle direction partant du dispositif 200. Par exemple, si le dispositif 200 est aéroporté, le dispositif 200 définit un plan d'horizon séparant l'espace en deux demi-espaces, un premier demi-espace contenant le sol et un second demi-espace contenant le ciel. En affectant un angle de 0° à toute direction contenue dans le plan d'horizon, le cône de révolution a par exemple une ouverture entre 15° et 80° dans le premier demi-espace pour chaque direction partant du dispositif 200.

Dans tout ce qui suit, nous désignerons indifféremment par émetteur radioélectrique ou émetteur, un équipement électronique de télécommunications qui transmet des signaux sous forme d'ondes électromagnétiques. Ces signaux peuvent être par exemple des programmes de radiodiffusion pour la radio ou la télévision, des signaux PMR (pour « Professionnal Mobile Radio), des signaux de téléphonie satellite, une conversation téléphonique ou encore une impulsion de télédétection radar.

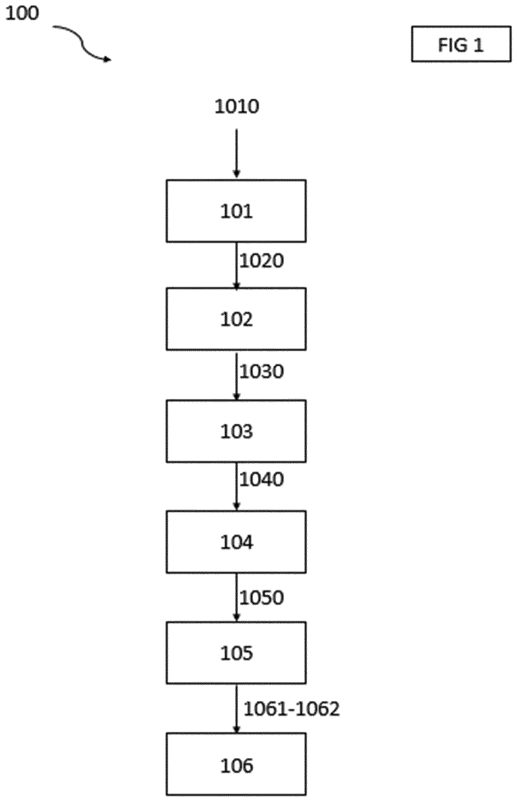

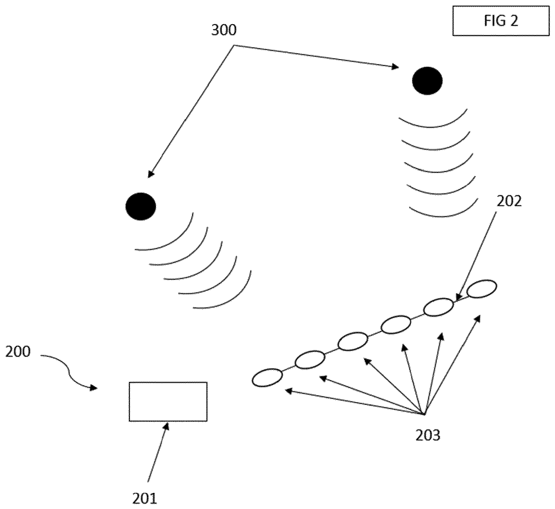

Le procédé 100 selon un premier aspect de l'invention comporte plusieurs étapes dont l'enchaînement est représenté à la figure 1. Ces étapes sont mises en œuvre par le dispositif 200 selon un deuxième aspect de l'invention, représenté à la figure 2. Le dispositif 200 peut être utilisé sur tout type de porteurs, terrestres, maritimes ou aéroportés. Le dispositif 200 comporte une unité de calcul 201 réalisant les étapes 102 à 106 de calcul du procédé 100 et un réseau antennaire 202 réalisant l'étape 101 d'acquisition et de numérisation.

Le réseau antennaire 202 comporte une pluralité d'antennes 203 qui captent en même temps des signaux d'acquisition 1010 en provenance de l'environnement proche pendant une durée d'acquisition 1011, c'est-à-dire que chaque antenne 203 reçoit un signal d'acquisition 1010 différent mais que l'acquisition est déclenchée simultanément pour toutes les antennes 203. La durée d'acquisition 1011 est la même pour toutes les antennes 203. On entend par antenne 203 un dispositif comportant un élément antennaire capable de capter des signaux de son environnement et d'un convertisseur analogique numérique capable de numériser un signal. Le signal d'acquisition 1010 reçu par chaque antenne 203 est ensuite numérisé de manière que tous les signaux d'acquisition 1010 reçus par les antennes 203 soient numérisés simultanément. Après numérisation, chaque antenne 203 transmet le signal numérisé 1020 obtenu après numérisation du signal d'acquisition 1010 à l'unité de calcul 201. Dans la présente demande, unité de calcul renvoie à un dispositif possédant une mémoire et des fonctions de calcul et de détection sur les signaux numérisés 1020.

La capacité du procédé 100 à détecter et séparer les émetteurs 300 est étroitement liée à la conception du réseau antennaire 202. Le réseau antennaire est de dimension variable. Le nombre d'antennes 203 du réseau antennaire 202 est variable. Préférentiellement, le nombre d'antennes 203 du réseau antennaire 202 est supérieur ou égal à 6. Le réseau antennaire peut par exemple tenir dans un mètre de circonférence.

Après réception des signaux numérisés 1020, l'unité de calcul 201 met en œuvre les étapes 102 à 106 de calcul du procédé 100. L'unité de calcul peut auparavant réaliser une étape de pré-traitement permettant de conditionner les signaux numérisés 1020 de manière qu'ils soient bien formatés avant application des calculs. Cette étape de pré-traitement comporte une ou plusieurs sous-étapes. L'étape de pré-traitement peut par exemple comporter trois sous-étapes, une sous-étape d'interpolation des signaux numérisés 1020 par un facteur deux, puis une sous-étape de filtrage des signaux numérisés 1020 par un filtre passe-bas, puis une sous-étape de décimation des signaux numérisés 1020 par un facteur trois.

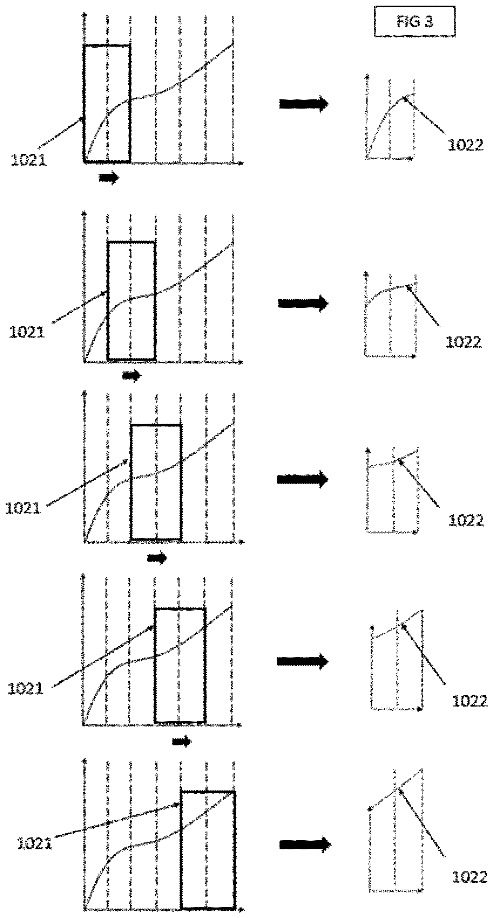

L'étape 102 de génération de spectres 1030 consiste à calculer une suite de spectres 1030 sur le signal numérisé 1020 de chaque antenne 203. On entend par spectre 1030 le diagramme qui associe à chaque fréquence une intensité ou une puissance. Le nombre de spectres 1030 est choisi en fonction d'une résolution fréquentielle 1032 choisie et de la durée d'acquisition 1011 : préférentiellement, la durée d'acquisition 1011 correspond à un nombre entier de spectres 1030. Les spectres 1030 sont calculés par application d'une transformée de Fourier discrète ou FFT sur le signal numérisé 1020 discret d'une antenne 203 : une FFT a besoin d'un certain nombre de points N du signal numérisé 1020 pour que le calcul soit possible. Pour calculer i spectres, il faut donc découper le signal numérisé 1020 en i sous-signaux 1022 contenant le nombre de points N nécessaire au calcul de la FFT. Préférentiellement, les spectres 1030 sont calculés avec un recouvrement temporel et plus préférentiellement avec un recouvrement temporel d'un demi, c'est-à-dire que la première moitié d'un sous-signal 1022 est égale à la deuxième moitié du sous-signal 1022 précédent. Le principe du découpage du signal numérisé 1020 en sous-signaux 1022 avec un recouvrement d'un demi est représenté à la figure 3. On prend une fenêtre 1021 présentant une taille selon l'axe des abscisses de deux fois le nombre de points N nécessaires pour le calcul de la FFT. On place la fenêtre au début du signal numérisé 1020 et on extrait le signal numérisé 1020 contenu dans la fenêtre 1021 pour réaliser un sous-signal 1022. On fait ensuite glisser la fenêtre 1021 d'une demie-taille de fenêtre 1021 selon l'axe des abscisses et on extrait le signal numérisé 1020 contenu dans la fenêtre 1021 pour réaliser un autre sous-signal 1022. On recommence ainsi jusqu'à la fin du signal numérisé 1020. A la fin du découpage, on a i sous-signaux 1022 du signal numérisé 1020 auxquels on va appliquer la FFT. Avant d'appliquer la FFT, il est possible d'appliquer une fenêtre de pondération aux sous-signaux 1022 pour les conditionner et contrer un phénomène de fuite spectrale. On entend par phénomène de fuite spectrale une dispersion de la puissance d'un signal sur plusieurs fréquences adjacentes à la fréquence du signal et qui vient donc fausser l'analyse fréquentielle.

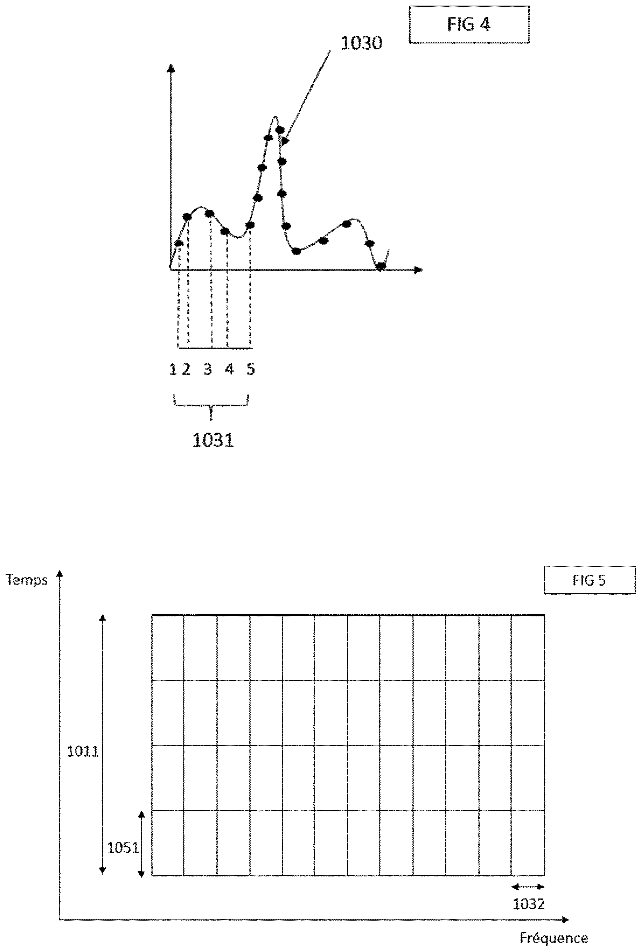

Chaque sous-signal 1022 va donner naissance à un spectre 1030 qui est calculé de manière discrète par la FFT, c'est-à-dire que pour chaque point du sous-signal 1022 discret, on calcule un point du spectre 1030. Comme illustré à la figure 4, les points du spectre sont numérotés avec des nombres entiers et ces nombres entiers sont appelés bins 1031.

Ainsi, la valeur X(k) du bin n°k est calculée de la façon suivante :

$$X(k) = \sum_{n=1}^{N} x(n) * \exp(-j\frac{2\pi(k-1)(n-1)}{N})$$

Avec x(n) la valeur du n-ème point du sous-signal 1022 et N le nombre de points du sous-signal 1022.

On obtient ainsi un spectre du sous-signal 1022 comportant N bins 1031. On réalise cette opération pour chaque sous-signal 1022 du signal numérisé 1020 puis pour chaque signal numérisé 1020 de chaque antenne 203. Ainsi, si le dispositif 200 comporte A antennes 203, on obtient A x i spectres 1030 et A x i x N bins 1031.

Il est ensuite possible de représenter un diagramme temps-fréquence ou spectrogramme pour chaque antenne. Un spectrogramme indique pour chaque bin 1031 et chaque spectre 1030 l'amplitude et la phase du signal d'acquisition 1010, délimitant des cases temps-fréquence. Ces amplitudes et ces phases sont fonction de la position et de l'orientation des antennes 203 vis-à-vis des émetteurs 300. La résolution fréquentielle 1032 permet de définir la taille en fréquence des cases temps-fréquence du spectrogramme.

Après avoir généré les spectres 1030, l'unité de calcul 201 réalise l'étape 103 de calcul de matrices de covariance 1040. Pour cela, on regroupe les spectres 1030 des différentes antennes 203 d'un même bin 1031 au sein d'un vecteur. Par exemple, on regroupe les spectres 1030 du bin n°4 du sous-signal n°8 de chaque antenne 203 au sein d'un vecteur V. Si, par exemple, le dispositif 200 comporte 5 antennes 203, le vecteur V contient 5 spectres et s'exprime ainsi :

$$V(8,4) = \begin{bmatrix} \mathrm{Spec}_{\mathrm{Ant1}}(8,4) \\ \mathrm{Spec}_{\mathrm{Ant2}}(8,4) \\ \mathrm{Spec}_{\mathrm{Ant3}}(8,4) \\ \mathrm{Spec}_{\mathrm{Ant4}}(8,4) \\ \mathrm{Spec}_{\mathrm{Ant5}}(8,4) \end{bmatrix}$$

Avec Spec désignant le spectre et Ant désignant l'antenne.

On obtient ainsi autant de vecteurs que de bins 1031, à savoir A x i x N vecteurs.

Si on désigne par Cov la matrice de covariance 1040 du vecteur V, son calcul s'exprime ainsi :

$$\mathrm{Cov}(m,k) = V(m,k) \times V^{T}(m,k)$$

Avec $V^T$ désignant le transposé conjugué de V, m le numéro du sous-signal 1022 et k le numéro du bin 1031.

Chaque bin 1031 obtient ainsi une matrice de covariance 1040 qui lui est associée. Chaque matrice de covariance 1040 traduit les différences relatives en amplitude et en phase entre les différents spectres 1030 contenus dans le vecteur V ayant servi à la calculer.

L'étape 104 de calcul des matrices de covariance bloc 1050 consiste à regrouper les matrices de covariance 1040 correspondant à des sous-signaux 1022 appartenant à un même bloc de durée 1051. Un bloc de durée 1051 est défini comme une sous-durée de la durée d'acquisition 1011, c'est-à-dire une durée inférieure à la durée d'acquisition 1011, extraite de la durée d'acquisition 1011. Un bloc de durée 1051 est par exemple un quart de la durée d'acquisition 1011. Préférentiellement, cette sous-durée est arrondie pour correspondre à un nombre entier de spectres 1030, c'est-à-dire à un nombre entier de sous-signaux 1022. Préférentiellement, sur la durée d'acquisition 1011, le nombre de blocs de durée 1051 est toujours supérieur ou égal à quatre. Préférentiellement, les spectres à cheval entre deux blocs de durée 1051 ne sont pas pris en compte dans le calcul des matrices de covariance bloc 1050.

Pour un bloc de durée 1051 donné, un certain nombre de sous-signaux 1022 sont définis. Ces sous-signaux 1022 sont associés à des spectres 1030 possédant des bins 1031 dont on a calculé les matrices de covariance 1040. Toutes ces matrices de covariance 1040 sont regroupées au sein d'une matrice de covariance bloc 1050 $\mathrm{Cov}_{\mathrm{bloc}}$ définie comme suit :

$$\text{Cov}_{\text{bloc}}(\text{mbloc}, k) = \frac{1}{B} \sum_{m \in \text{bloc}} \text{Cov}(m, k)$$

Avec B un coefficient, m le numéro du sous-signal 1022 et k le numéro du bin 1031.

B est par exemple le nombre de spectres 1030 par bloc arrondi à la puissance de 2 supérieure.

La matrice de covariance bloc 1050 est une version moyennée des matrices de covariance 1040 sur un bloc de durée 1051. Il est maintenant possible de construire un spectrogramme de matrices de covariance bloc indiquant la valeur de la matrice de covariance bloc pour chaque case temps-fréquence. Ce fonctionnement par bloc de durée 1051 permet d'améliorer le rapport signal à bruit du spectrogramme de matrices de covariance bloc 1050 par rapport à un spectrogramme de matrices de covariance 1040. Le bloc de durée 1051 permet de définir la taille en temps des cases temps-fréquence du spectrogramme de matrices de covariance bloc et la résolution fréquentielle 1032 permet de définir la taille en fréquence des cases temps-fréquence du spectrogramme de matrices de covariance bloc. Les cases temps-fréquence du spectrogramme de matrices de covariance bloc sont représentées à la figure 5. Les valeurs du bloc de durée 1051 et de la résolution fréquentielle 1032 sont choisies pour que les émetteurs occupent plusieurs cases temps-fréquence sur le spectrogramme de matrices de covariance bloc. En effet, le principe de détection utilisé dans le procédé 100 exploite le fait que les signaux générés par les émetteurs 300 ont une cohérence spatiale supérieure à celle du bruit ambiant, c'est-à-dire que la stabilité entre deux matrices de covariance bloc voisines associées à un signal d'émetteur 300 sont plus stables entre elles que deux matrices de covariance bloc voisines associées à du bruit. On ne peut donc plus discriminer un émetteur du bruit ambiant s'il occupe une unique case temps-fréquence. De manière générale, plus la taille des cases temps-fréquence augmente, plus le bruit devient cohérent spatialement car moyenné sur la case temps-fréquence, et plus il est difficile de détecter les émetteurs 300. Il faut donc choisir la taille des cases temps-fréquence pour que les matrices de covariance bloc 1050 des cases temps-fréquence associées au bruit soient considérés non colinéaires.

On peut alors chercher à quantifier la stabilité de la matrice de covariance bloc 1050 entre cases temps-fréquence voisines du spectrogramme de matrices de covariance bloc. Des matrices de covariance bloc 1050 voisines stables entre elles sont indicatrices de la présence d'un émetteur 300. L'efficacité du procédé 100 est maximale quand la vitesse des émetteurs est inférieure à 50 km/h. Mathématiquement, la stabilité reflète le pourcentage de colinéarité entre matrices de covariance bloc 1050 voisines. Pendant l'étape 105 de mesures de colinéarité, on calcule une première mesure de colinéarité 1061 entre deux matrices de covariance bloc 1050 ayant deux blocs de durée 1051 voisins sur le spectrogramme de matrices de covariance bloc 1050 et une seconde mesure de colinéarité 1062 entre deux matrices de covariance bloc 1050 ayant deux bins 1031 voisins au sein d'un même bloc de durée 1051 sur le spectrogramme de matrices de covariance bloc 1050. La première mesure de colinéarité 1061 permet de quantifier la colinéarité des matrices de covariance bloc selon l'axe temporel et la seconde mesure de colinéarité 1062 permet de quantifier la colinéarité des matrices de covariance bloc selon l'axe fréquentiel. La première 1061 et la seconde mesure de colinéarité 1062 sont par exemple des produits scalaires normalisés définies comme suit :

$$\text{mesure}_1(\text{mbloc}, k) = \frac{\langle \text{Cov}_{\text{bloc}}(\text{mbloc}, k) | \text{Cov}_{\text{bloc}}(\text{mbloc} + 1, k) \rangle}{\|\text{Cov}_{\text{bloc}}(\text{mbloc}, k)\| \|\text{Cov}_{\text{bloc}}(\text{mbloc} + 1, k)\|}$$

$$\text{mesure}_2(\text{mbloc}, k) = \frac{\langle \text{Cov}_{\text{bloc}}(\text{mbloc}, k) | \text{Cov}_{\text{bloc}}(\text{mbloc}, k + 1) \rangle}{\|\text{Cov}_{\text{bloc}}(\text{mbloc}, k)\| \|\text{Cov}_{\text{bloc}}(\text{mbloc}, k + 1)\|}$$

Avec $\text{Cov}_{\text{bloc}}$ la matrice de covariance bloc 1050, m le numéro du sous-signal 1022 et k le numéro du bin 1031 et :

$$\langle A | B \rangle = \text{Trace}(A^T x\ B)$$

$$\|A\| = \sqrt{\text{Trace}(A^T x\ A)}$$

Avec A et B deux matrices complexes de mêmes dimensions.

Ainsi, les valeurs des première 1061 et seconde mesure de colinéarité 1062 sont comprises entre 0 et 1 : si les matrices de covariance bloc 1050 sont orthogonales, les première 1061 et la seconde mesure de colinéarité 1062 valent 0 et si les matrices de covariance bloc 1050 sont colinéaires, les première 1061 et seconde mesure de colinéarité 1062 valent 1.

Pour étudier la colinéarité des matrices de covariance bloc 1050 selon les blocs de durée 1051 et les bins 1031, on réalise un produit de colinéarité 1063 entre les première 1061 et deuxième 1062 mesures de colinéarité pendant l'étape de détection 106 pour chaque bin 1031.

Pour pouvoir détecter les émetteurs 300, un seuil de détection 1064 est choisi. Celui-ci dépend du produit entre la résolution fréquentielle 1032 et le bloc de durée 1051. En effet, plus ce produit est grand, plus les cases temps-fréquence sont grandes et donc plus il devient difficile de discriminer les émetteurs du bruit ambiant: il faut donc avoir une valeur de seuil de détection 1064 plus élevée pour se prémunir des fausses alarmes ou détections déclenchées alors qu'il n'y a pas d'émetteur. Le seuil de détection 1064 est également choisi pour se prémunir des fausses détections déclenchées par les signaux d'acquisition 1010 mais ne devant pas être prises en compte. Le seuil de détection 1064 peut par exemple être positionné à une valeur supérieure à 0,90.

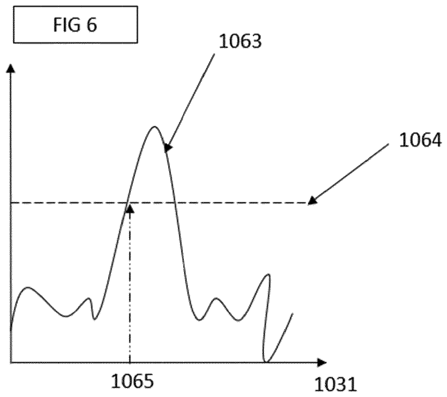

Une fois le seuil de détection 1064 choisi, pour chaque bloc de durée 1051, on relève le numéro des bins 1031 dont la valeur du produit de colinéarité 1063 est au-dessus du seuil 1064 alors que la valeur du produit de colinéarité 1063 du bin le précédant est en dessous du seuil 1064 : ces bins 1031 sont des bins de début 1065. Le principe de la détection par seuillage est représenté à la figure 6.

Ainsi, le nombre de bins de début 1065 d'un bloc de durée 1051 donne le nombre d'émetteurs dont les signaux ont été captés sur la sous-durée de la durée d'acquisition 1011 correspondant au bloc de durée 1051. Par exemple, si on trouve trois bins de début 1065 sur le deuxième bloc de durée 1051, on a détecté trois émetteurs 300 qui émettaient sur la sous-durée de la durée d'acquisition 1011 correspondant au deuxième bloc de durée 1051.

Après détection, les émetteurs 300 peuvent être caractérisés pour fournir des paramètres d'intérêt comme la fréquence centrale, la largeur de bande ou encore la puissance du signal associée à chaque émetteur 300. Il est également possible de localiser les émetteurs 300 en utilisant par exemple des algorithmes de goniométrie ou encore de suivre l'évolution temporelle des émetteurs 300 bloc de durée par bloc de durée.

**Revendications**

1. Procédé de détection (100) de la présence d'un ou de plusieurs émetteurs radioélectriques (300) dans un environnement, le procédé étant mis en œuvre par un dispositif (200) comportant une unité de calcul (201) et un réseau antennaire (202) comportant une pluralité d'antennes (203) aptes à réaliser des acquisitions en simultané de l'environnement sous forme de signaux d'acquisition (1010) pendant une durée d'acquisition (1011) et à recevoir et transmettre en simultané les signaux d'acquisition (1010) sous forme numérique à l'unité de calcul (201), l'unité de calcul (201) étant apte à réaliser des traitements sur des signaux numérisés (1020), le procédé (100) comportant les différentes étapes suivantes :

   - Pour chaque antenne (203),

     • Recevoir et numériser le signal d'acquisition (1010) sous forme de signal numérisé (1020) et transmettre le signal numérisé (1020) à l'unité de calcul (201) (101) ;
     • Générer une pluralité de spectres (1030) à partir du signal numérisé (1020) ayant une résolution fréquentielle (1032) choisie, un spectre (1020) comportant une pluralité de points, chaque point étant affecté à un numéro appelé bin (1031) (102) ;

   le procédé (100) étant **caractérisé en ce qu'**il comporte les étapes suivantes :

     - Pour chaque bin (1031), regrouper les spectres (1030) des différentes antennes (203) correspondant au bin (1031) et calculer une matrice de covariance (1040) (103) ;
     - Regrouper les matrices de covariance (1040) dont les spectres (1030) associés correspondent à un même bloc de durée (1051), un bloc de durée (1051) étant défini comme une sous-durée de la durée d'acquisition (1011), pour former des matrices de covariance bloc (1050) (104) ;
     - Calculer une première mesure de colinéarité (1061) des matrices de covariance bloc (1050) entre deux blocs de durée (1051) consécutifs et une seconde mesure de colinéarité (1062) des matrices de covariance bloc (1050) entre deux bins (1031) consécutifs (105) d'un même bloc de durée (1051) ;
     - Détecter un ou plusieurs émetteurs radioélectriques (300) en réalisant les étapes suivantes :

       • Pour chaque bin (1031), calculer le produit entre la première (1061) et la seconde mesure de colinéarité (1062) pour former un produit de colinéarité (1063) ;

• Pour chaque bloc de durée (1051) :

◦ Relever le numéro des bins de début (1065) pour lesquels le produit de colinéarité (1063) passe au-dessus d'un seuil (1064), c'est-à-dire que la valeur du produit de colinéarité (1063) pour un bin de début (1065) est au-dessus du seuil (1064) et la valeur du produit de colinéarité (1063) pour le bin (1031) précédent ce bin de début (1065) est en dessous du seuil (1064) ;
◦ Le nombre de bins de début (1065) donne le nombre d'émetteurs radioélectriques (300) détectés dans le bloc de durée (1051).

2. Procédé de détection (100) selon la revendication 1, **caractérisé en ce que** l'étape (102) de génération de spectres (1030) comporte les sous-étapes suivantes :

- Découper le signal numérisé (1020) en une pluralité de fenêtres (1021), de manière à former des sous-signaux numérisés (1022) ;
- Pour chaque sous-signal numérisé (1022), calculer une transformée de Fourier discrète pour obtenir un spectre (1030).

3. Procédé de détection (100) selon la revendication 2, **caractérisé en ce que** l'étape (102) de génération de spectres (1030) comporte une sous-étape de pré-traitement pour formater le signal numérisé (1020) avant la sous-étape de découpage.

4. Procédé de détection (100) selon l'une quelconque des revendications 2 ou 3, **caractérisé en ce que** chaque fenêtre (1021) recouvre une partie de la fenêtre (1021) précédente.

5. Procédé de détection (100) selon l'une quelconque des revendications 2 à 4, **caractérisé en ce que** l'étape (102) de génération de spectres (1030) comporte une sous-étape de pondération des sous-signaux numérisés (1022) avant le calcul des transformées de Fourier discrètes de chaque sous-signal numérisé (1022).

6. Procédé de détection (100) selon l'une quelconque des revendications précédentes, **caractérisé en ce que** les matrices de covariance bloc (1050) sont formées par moyennage des valeurs des matrices de covariance (1040) correspondant à un même bloc de durée (1051).

7. Procédé de détection (100) selon l'une quelconque des revendications précédentes, **caractérisé en ce que** la première mesure de colinéarité (1061) est une mesure de produit scalaire normalisé entre la matrice de covariance bloc (1050) d'un premier bloc de durée (1051) et la matrice de covariance bloc (1050) d'un deuxième bloc de durée (1051), deuxième bloc de durée (1051) étant le bloc de durée (1051) suivant le premier bloc de durée (1051).

8. Procédé de détection (100) selon l'une quelconque des revendications précédentes, **caractérisé en ce que** la seconde mesure de colinéarité (1062) est une mesure de produit scalaire normalisé entre la matrice de covariance bloc (1050) d'un premier bin (1031) et la matrice de covariance bloc (1050) d'un deuxième bin (1031), deuxième bin (1031) étant le bin (1031) suivant le premier bin (1031).

9. Procédé de détection (100) selon l'une quelconque des revendications précédentes, **caractérisé en ce que** la valeur du seuil (1064) choisi dépend de la résolution fréquentielle (1032) choisie et de la sous-durée d'acquisition correspondant à un bloc de durée (1051).

10. Dispositif (200) adapté à la mise en œuvre du procédé selon l'une quelconque des revendications précédentes, **caractérisé en ce qu'**il comporte :

- Un réseau antennaire (202) comportant une pluralité d'antennes (203) aptes à recevoir simultanément et à numériser des signaux d'acquisition (1010) pour les transmettre à une unité de calcul (201) sous forme de signaux numérisés (1020) ;
- Une unité de calcul (201) apte à réaliser des fonctions de calcul et de détection sur des signaux numérisés (1020).

11. Produit programme d'ordinateur comprenant des instructions qui, lorsque le programme est exécuté par un ordinateur, conduisent celui-ci à mettre en œuvre le procédé (100) selon l'une quelconque des revendications 1 à 9.

12. Support d'enregistrement lisible par ordinateur comprenant des instructions qui, lorsqu'elles sont exécutées par un ordinateur, conduisent celui-ci à mettre en œuvre le procédé (100) selon l'une quelconque des revendications 1 à 9.

**Patentansprüche**

1. Erkennungsverfahren (100) des Vorhandenseins eines oder mehrerer funkelektrischer Sender (300) in einer Umgebung, wobei das Verfahren durch eine Vorrichtung (200) umgesetzt wird, umfassend eine Berechnungseinheit (201) und ein Antennennetz (202), umfassend eine Vielzahl von Antennen (203), die geeignet sind, simultane Erfassungen der Umgebung in Form von Erfassungssignalen (1010) während einer Erfassungsdauer (1011) zu realisieren und die Erfassungssignale (1010) simultan in digitaler Form auf die Berechnungseinheit (201) zu empfangen und zu übertragen, wobei die Berechnungseinheit (201) geeignet ist, Verarbeitungen auf digitalisierten Signalen (1020) zu realisieren, wobei das Verfahren (100) die folgenden unterschiedlichen Schritte umfasst:

   - Für jede Antenne (203).

      • Empfangen und digitalisieren des Erfassungssignals (1010) in Form eines digitalisierten Signals (1020) und übertragen des digitalisierten Signals (1020) auf die Berechnungseinheit (201) (101);
      • Erzeugen einer Vielzahl von Spektren (1030) ausgehend von dem digitalisierten Signal (1009) mit einer gewählten Frequenzauflösung (1032), einem Spektrum (1020), das eine Vielzahl von Punkten umfasst, wobei jeder Punkt einer als Bin (1031) (102) bezeichneten Nummer zugeordnet ist;

   wobei das Verfahren (100) **dadurch gekennzeichnet ist, dass** es die folgenden Schritte umfasst:

   - Für jedes Bin (1031), zusammenfassen die Spektren (1030) der unterschiedlichen Antennen (203), die dem Bin (1031) entsprechen, und berechnen eine Kovarianzmatrix (1040) (103);
   - Zusammenfassen der Kovarianzmatrizes (1040), deren zugeordnete Spektren (1030) einem gleichen Dauerblock (1051) entsprechen, wobei ein Dauerblock (1051) als eine Teildauer der Erfassungsdauer (1011) definiert wird, um Block-Kovarianzmatrizes (1050) (104) zu bilden;
   - Berechnen einer ersten Kollinearitätsmessung (1061) der Block-Kovarianzmatrizes (1050) zwischen zwei konsekutiven Dauerblöcken (1051) und einer zweiten Kollinearitätsmessung (1062) der Block-Kovarianzmatrizes (1050) zwischen zwei konsekutiven (105) Bins (1031) eines und desselben Dauerblocks (1051);
   - Erkennen eines oder mehrerer funkelektrischer Sender (300) durch Realisieren der folgenden Schritte:

      • Für jedes Bin (1031) berechnen des Produkts zwischen der ersten (1061) und der zweiten Kollinearitätsmessung (1062) zum Bilden eines Kollinearitätsprodukts (1063);
      • Für jeden Dauerblock (1051):

         ∘ Erfassen der Nummer der Anfangsbins (1065), für die das Kollinearitätsprodukt (1063) über einen Schwellenwert (1064) hinausgeht, d. h., dass der Wert des Kollinearitätsprodukts (1063) für ein Anfangsbin (1065) oberhalb des Schwellenwerts (1064) und des Wertes des Kollinearitätsprodukts (1063) für das Bin (103), das diesem Anfangsbin (1065) vorausgeht, unterhalb des Schwellenwertes (1064) ist;
         ∘ Die Anzahl der Anfangsbins (1065) ergibt die Anzahl von funkelektrischen Sendern (300), die im Dauerblock (1051) erkannt werden.

2. Erkennungsverfahren (100) gemäß Anspruch 1, **dadurch gekennzeichnet, dass** der Schritt (102) zum Erzeugen von Spektren (1030) die folgenden Teilschritte umfasst:

   - Zerschneiden des digitalisierten Signals (1020) in eine Vielzahl von Fenstern (1021) derart, dass digitalisierte Teilsignale (1022) gebildet werden;
   - Für jedes digitalisierte Teilsignal (1022), berechnen einer diskreten Fourier-Transformierten zum erhalten eines Spektrums (1030).

3. Erkennungsverfahren (100) gemäß Anspruch 2, **dadurch gekennzeichnet, dass** der Schritt (102) zum Erzeugen von Spektren (1030) einen Teilschritt der Vorverarbeitung zum Formatieren des digitalisierten Signals (1020) vor dem Teilschritt des Zerschneidens umfasst.

4. Erkennungsverfahren (100) gemäß irgendeinem der Ansprüche 2 oder 3, **dadurch gekennzeichnet, dass** jedes Fenster (1021) einen Teil des vorherigen Fensters (1021) abdeckt.

5. Erkennungsverfahren (100) gemäß irgendeinem der Ansprüche 2 bis 4, **dadurch gekennzeichnet, dass** der Schritt (102) zum erzeugen von Spektren (1030) einen Gewichtungs-Teilschritt der digitalisierten Teilsignale (1022) vor der Berechnung der diskreten Fourier-Transformierten jedes digitalisierten Teilsignals (1022) umfasst.

6. Erkennungsverfahren (100) gemäß irgendeinem der voranstehenden Ansprüche, **dadurch gekennzeichnet, dass** die Block-Kovarianzmatrizes (1050) per Mittelung der Werte der Kovarianzmatrizes (1040) gebildet werden, die einem und demselben Dauerblock (1051) entsprechen.

7. Erkennungsverfahren (100) gemäß irgendeinem der voranstehenden Ansprüche, **dadurch gekennzeichnet, dass** die erste Kollinearitätsmessung (1061) eine Messung des normalisierten Skalarprodukts zwischen der Block-Kovarianzmatrix (1050) eines ersten Dauerblocks (1051) und der Block-Kovarianzmatrix (1050) eines zweiten Dauerblocks (1051) ist, wobei der zweite Dauerblock (1051) der Dauerblock (1051) ist, der auf den ersten Dauerblock (1051) folgt.

8. Erkennungsverfahren (100) gemäß irgendeinem der voranstehenden Ansprüche, **dadurch gekennzeichnet, dass** die zweite Kollinearitätsmessung (1062) eine Messung des normalisierten Skalarprodukts zwischen der Block-Kovarianzmatrix (1050) eines ersten Bins (1031) und der Block-Kovarianzmatrix (1050) eines zweiten Bins (1031) ist, wobei das zweite Bin (1031) das Bin (1031) ist, das auf das erste Bin (1031) folgt.

9. Erkennungsverfahren (100) gemäß irgendeinem der voranstehenden Ansprüche, **dadurch gekennzeichnet, dass** der gewählte Schwellenwert (1064) von der gewählten Frequenzauflösung (1032) und der Erfassungs-Teildauer, die einem Dauerblock (1051) entspricht, abhängt.

10. Vorrichtung (200), die zum umsetzen des Verfahrens gemäß irgendeinem der voranstehenden Ansprüche geeignet ist, **dadurch gekennzeichnet, dass** es umfasst:

   - Ein Antennennetz (202), umfassend eine Vielzahl von Antennen (203), die geeignet sind, Erfassungssignale (1010) gleichzeitig zu empfangen und zu digitalisieren, um sie in Form von digitalisierten Signalen (1020) auf eine Berechnungseinheit (201) zu übertragen;
   - Eine Berechnungseinheit (201), die geeignet ist, Berechnungs- und Erkennungsfunktionen auf digitalisierten Signalen (1020) zu realisieren.

11. Computerprogramm-Produkt, umfassend Anweisungen, die, wenn das Programm von einem Computer ausgeführt wird, diesen dazu veranlassen, das Verfahren (100) gemäß irgendeinem der Ansprüche 1 bis 9 umzusetzen.

12. Per Computer lesbarer Aufzeichnungsträger, umfassend Anweisungen, die, wenn sie von einem Computer ausgeführt werden, diesen dazu veranlassen, das Verfahren (100) gemäß irgendeinem der Ansprüche 1 bis 9 auszuführen.

**Claims**

1. Method (100) for detecting the presence of one or more radioelectric transmitters (300) in an environment, the method being implemented by a device (200) comprising a computing unit (201) and an antenna array (202) comprising a plurality of antennas (203) able to carry out acquisitions simultaneously from the environment in the form of acquisition signals (1010) during an acquisition time (1011) and to receive and transmit simultaneously the acquisition signals (1010) in digital form to the computing unit (201), the computing unit (201) being able to carry out processings on digitised signals (1020), the method (100) comprising the following different steps:

   - For each antenna (203),

      • Receiving and digitising the acquisition signal (1010) in the form of a digitised signal (1020) and transmitting the digitised signal (1020) to the computing unit (201) (101);
      • Generating a plurality of spectra (1030) from the digitised signal (1020) having a chosen frequency resolution (1032), a spectrum (1020) comprising a plurality of points, each point being assigned to a number called bin (1031) (102);

the method (100) being **characterised in that** it comprises the following steps:

- For each bin (1031), grouping together the spectra (1030) of the different antennas (203) corresponding to the bin (1031) and computing a covariance matrix (1040) (103);
- Grouping together the covariance matrices (1040) of which the associated spectra (1030) correspond to a same time block (1051), a time block (1051) being defined as a sub-time of the acquisition time (1011), to form block covariance matrices (1050) (104);
- Computing a first co-linearity measurement(1061) of the block covariance matrices (1050) between two consecutive time blocks (1051) and a second co-linearity measurement (1062) of the block covariance matrices (1050) between two consecutive bins (1031, 105) of a same time block (1051);
- Detecting one or more radioelectric transmitters (300) by carrying out the following steps:

  • For each bin (1031), computing the product between the first (1061) and the second co-linearity measurement (1062) to form a co-linearity product (1063);
  • For each time block (1051):

    ◦ Noting the number of start bins (1065) for which the co-linearity product (1063) passes above a threshold (1064), that is to say that the value of the co-linearity product (1063) for a start bin (1065) is above the threshold (1064) and the value of the co-linearity product (1063) for the bin (1031) preceding this start bin (1065) is below the threshold (1064);
    ◦ The number of start bins (1065) gives the number of radioelectric transmitters (300) detected in the time block (1051).

2. Detection method (100) according to claim 1, **characterised in that** the step (102) of generating spectra (1030) comprises the following sub-steps:

   - Splitting the digitised signal (1020) into a plurality of windows (1021), so as to form digitised sub-signals (1022);
   - For each digitised sub-signal (1022), computing a discrete Fourier transform to obtain a spectrum (1030).

3. Detection method (100) according to claim 2, **characterised in that** the step (102) of generating spectra (1030) comprises a pre-processing sub-step to format the digitised signal (1020) before the splitting sub-step.

4. Detection method (100) according to any of claims 2 or 3, **characterised in that** each window (1021) overlaps a part of the preceding window (1021).

5. Detection method (100) according to any of claims 2 to 4, **characterised in that** the step (102) of generating spectra (1030) comprises a sub-step of weighting the digitised sub-signals (1022) before the computation of the discrete Fourier transforms of each digitised sub-signal (1022).

6. Detection method (100) according to any of the preceding claims, **characterised in that** the block covariance matrices (1050) are formed by averaging the values of the covariance matrices (1040) corresponding to a same time block (1051).

7. Detection method (100) according to any of the preceding claims, **characterised in that** the first co-linearity measurement(1061) is a normalised scalar product measurement between the block covariance matrix (1050) of a first time block (1051) and the block covariance matrix (1050) of a second time block (1051), the second time block (1051) being the time block (1051) following the first time block (1051).

8. Detection method (100) according to any of the preceding claims, **characterised in that** the second co-linearity measurement (1062) is a normalised scalar product measurement between the block covariance matrix (1050) of a first bin (1031) and the block covariance matrix (1050) of a second bin (1031), the second bin (1031) being the bin (1031) following the first bin (1031).

9. Detection method (100) according to any of the preceding claims, **characterised in that** the value of the chosen threshold (1064) depends on the chosen frequency resolution (1032) and on the acquisition sub-time corresponding to a time block (1051).

10. Device (200) enabling the implementation of the method according to any of the preceding claims, **characterised**

EP 3 506 578 B1

**in that** it comprises:

- An antenna array (202) comprising a plurality of antennas (203) able to receive simultaneously and to digitise acquisition signals (1010) to transmit them to a computing unit (201) in the form of digitised signals (1020);
- A computing unit (201) able to carry out computation and detection functions on the digitised signals (1020).

11. Computer program product including instructions which, when the programme is run on a computer, lead said computer to implement the method (100) according to any of claims 1 to 9.

12. Recording support that can be read by a computer including instructions which, when they are run on a computer, lead said computer to implement the method (100) according to any of claims 1 to 9.

100

FIG 1

1010

101

1020

102

1030

103

1040

104

1050

105

1061-1062

106

FIG 2

300

202

200

201

203

FIG 3

FIG 4

1030

1 2 3 4 5

1031

FIG 5

Temps

1011

1051

1032

Fréquence

FIG 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2015024827 A

**Littérature non-brevet citée dans la description**

• **BADAWY AHMED et al.** *Estimating the number of sources in white Gaussian noise : simple eigenvalues based approaches*